(19)

Europäisches
Patentamt
European
Patent Office
Office européen
des brevets

(11) **EP 1 975 441 B1**

(12) **EUROPEAN PATENT SPECIFICATION**

(45) Date of publication and mention
of the grant of the patent:
**11.01.2012  Bulletin 2012/02**

(51) Int Cl.:
***F16D 48/06*** *(2006.01)*

(21) Application number: **08003279.0**

(22) Date of filing: **22.02.2008**

(54) **Vehicle having gear change control device, and method of controlling gearbox**

Fahrzeug mit Getriebeumschaltungssteuerungssystem und Verfahren für die Steuerung des Getriebes

Véhicule avec système d'assistance d'embrayage et procédé pour cette assistance

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **23.02.2007  JP 2007043645
06.09.2007  JP 2007231135**

(43) Date of publication of application:
**01.10.2008  Bulletin 2008/40**

(73) Proprietor: **Yamaha Hatsudoki Kabushiki Kaisha
Shizuoka-ken 438-8501 (JP)**

(72) Inventors:
• **Minami, Kengo
c/oYamaha Hatsudoki Kabushiki Kaisha
Iwata-shi
Shizuoka-ken 438-8501 (JP)**

• **Kosugi, Makoto
c/oYamaha Hatsudoki Kabushiki Kaisha
Iwata-shi
Shizuoka-ken 438-8501 (JP)**

(74) Representative: **Grünecker, Kinkeldey,
Stockmair & Schwanhäusser
Anwaltssozietät
Leopoldstrasse 4
80802 München (DE)**

(56) References cited:
**EP-A1- 1 855 021     EP-A1- 1 888 935
EP-A2- 1 674 755**

**Description**

The present invention relates to a technique for changing shift gears and engaging and disengaging a clutch using an actuator. In particular, it relates to a vehicle having a clutch and a gear box as part of a transmission path.

There have conventionally been vehicles that disengage a clutch and change shift gears by actuating an actuator according to a shift-up operation or a shift-down operation by a rider. In general, gear change control devices mounted on such vehicles start gradually engaging the clutch after the shift gears have completely been moved or changed.

Patent Document EP 1 674 755 discloses a clutch control system via clutch slip control.

The driver may occasionally make successive shift-up operations or shift-down operations in a short time while the vehicle is running. In order to respond to such quick gear change operations by the rider or by a driver, the gear change control device disclosed in Patent Document 1 (Patent Document 1: JP-B-3132358) allows the reception of a next gear change command even before the start of engagement of the clutch if the shift gears have completely been moved. When a next gear change command is inputted before the start of engagement of the clutch, this gear change control device does not engage the clutch but starts moving the shift gears according to the next gear change command while keeping the clutch disengaged. This gear change control device engages the clutch after the completion of the movement. This allows the rider/driver to make quicker gear change operations than in the case where the reception of a next gear change command is started after the completion of engagement of the clutch.

However, the riding comfort of the vehicle provided with the gear change control device of Patent Document 1 may be poor at gear changes. Specifically, when a next gear change command is inputted before the start of engagement of the clutch, the gear change control device of Patent Document 1 changes the shift gears according to the next gear change command while keeping the clutch disengaged. Therefore, the shift gear corresponding to the gear change command inputted later is set without the rider sensing deceleration and acceleration at the shift gear corresponding to the gear change command inputted earlier at all. Therefore, deceleration and acceleration exceeding the expectation of the rider may occur when the shift gears are completely changed and the clutch is engaged, leading to the poor riding comfort of the vehicle.

The present invention has been made in view of the foregoing problem, and therefore has an object to provide a vehicle with a gear change control device, in particular a straddle-type vehicle, and a method of controlling a gearbox that can improve the riding comfort of the vehicle by reducing the occurrence of deceleration and acceleration exceeding the expectation of a rider due to successive gear changes.

For the apparatus aspect, this objective is solved in an inventive manner by a vehicle having a clutch and a gear box as part of a torque transmission path, and comprising: a clutch actuator for changing a degree of engagement of the clutch; a current torque obtaining section for obtaining torque being currently transmitted from a drive-side member of the clutch to a downstream mechanism in the torque transmission path as current torque, the downstream mechanism including a driven-side member of the clutch; a post-completion torque obtaining section for obtaining torque estimated to be transmitted from the drive-side member to the downstream mechanism after completion of engagement of the clutch as post-completion torque; and a control unit functioning as a gear change control device for disengaging the clutch by actuating the clutch actuator and changing shift gears in response to a gear change command, and then controlling the degree of engagement of the clutch according to a difference between the current torque and the post-completion torque, wherein the control unit receives a next gear change command according to the difference between the current torque and the post-completion torque.

Preferably, the current torque obtaining section is configured to calculate the current torque based on torque outputted from a power source and inertia torque of a mechanism upstream of the drive-side member in the torque transmission path.

Further, preferably the post-completion torque obtaining section is configured to estimate torque outputted from a power source after the completion of engagement of the clutch and inertia torque of a mechanism upstream of the drive-side member after the completion of engagement of the clutch, and to calculate the post-completion torque based on the estimated torque and the estimated inertia torque.

Still further, preferably the control unit starts receiving a next gear change command according to a time when the difference between the current torque and the post-completion torque becomes a predetermined value or less.

For the method aspect, this objective is solved by a method of controlling a gearbox and a clutch in a torque transmission path of a vehicle, comprising: disengaging the clutch by actuating a clutch actuator and changing shift gears in response to a gear change command; obtaining torque being transmitted from a drive-side member of the clutch to a downstream mechanism in a torque transmission path as current torque, the downstream mechanism including a driven-side member of the clutch; obtaining torque estimated to be transmitted from the drive-side member to the downstream mechanism after completion of engagement of the clutch as post-completion torque; controlling a degree of engagement of the clutch according to a difference between the current torque and the post-completion torque; and starting to receive a next gear change command according to the difference between the current torque and the post-completion torque.

In the following, the present invention is explained in greater detail with respect to several embodiments thereof in conjunction with the accompanying drawings, wherein:

FIG. 1 is a side view of a motorcycle provided with a gear change control device according to an embodiment of the present teaching,

FIG. 2 is a conceptual diagram of a mechanism located on a torque transmission path of the motorcycle,

FIG. 3 is a block diagram showing the configuration of the gear change control device,

FIG. 4 is a functional block diagram of a control unit provided in the gear change control device,

FIG. 5 is a graph showing the relationship between the difference between post-completion transmission torque and current transmission torque and a command actuation amount obtained using an actuation amount relational expression,

FIG. 6 is a graph showing the relationship between the difference between post-completion transmission torque and current transmission torque and a command actuation amount obtained using a disengagement actuation amount relational expression,

FIG. 7 is a flowchart showing the processing executed by the control unit, and

FIG. 8 is a time chart showing the results of the processing executed by the control unit, wherein FIG. 8(a) shows changes over time in the degree of engagement of a clutch, FIG. 8(b) shows changes over time in the post-completion transmission torque, FIG. 8(c) shows changes over time in the current transmission torque, and FIG. 8(d) shows changes over time in the ON/OFF state of a prohibition flag.

Description of Reference Numerals and Symbols:

    1: motorcycle
    2: front wheel
    3: rear wheel
    4: front fork
    5: handlebars
    10: gear change control device

    11: control unit
    11a: current torque obtaining section
    11d: post-completion torque obtaining section
    11g: clutch actuator control section
    11h: shift actuator control section
    11i: reception permission determination section
    12: storage unit
    13: clutch actuator drive circuit
    14: clutch actuator
    15: shift actuator drive circuit
    16: shift actuator
    17: accelerator operation detector
    18: engine speed detector
    19: vehicle speed detector
    21: gear position detector
    22: clutch position detector
    23a, 23b: clutch rotational speed detector
    9a: shift-up switch
    9b: shift-down switch
    30: engine
    31: cylinder
    32: piston
    33: intake port
    34: crankshaft
    35: intake pipe
    36: primary speed reducing mechanism
    37: throttle body
    40: clutch
    41: drive-side member
    42: driven-side member
    43: push rod
    50: secondary speed reducing mechanism
    51: gearbox
    52: main shaft
    53a, 54a, 53b, 54b: shift gear
    55: countershaft
    56: gearshift mechanism
    57: transmission mechanism

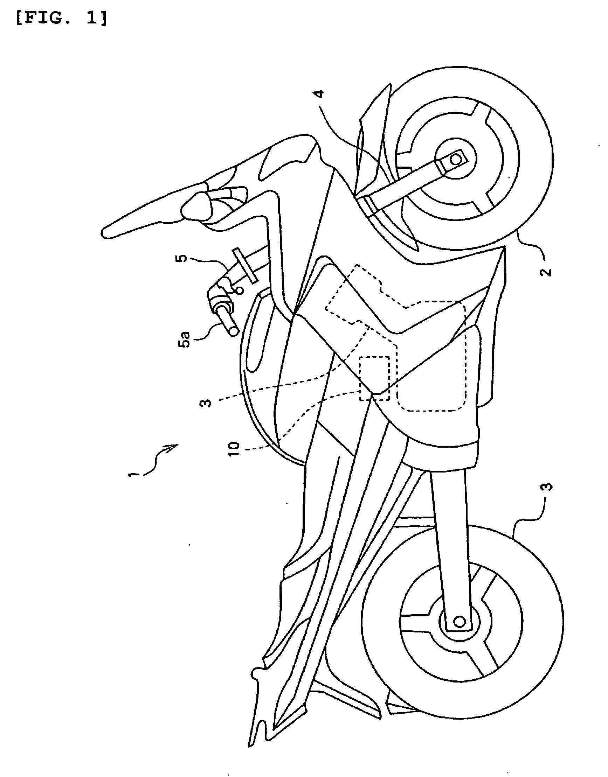

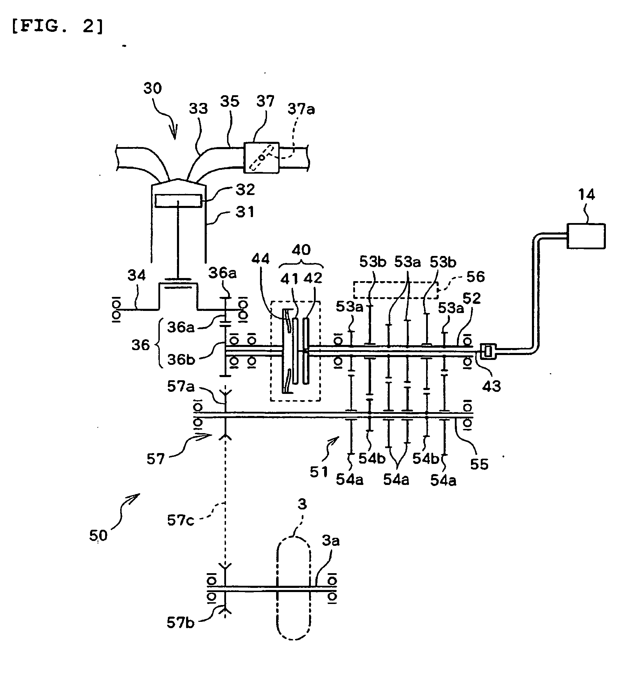

An embodiment of the present teaching is described below with reference to the drawings. FIG. 1 is a side view of a motorcycle 1 provided with a gear change control device 10 according to an exemplary embodiment of the present teaching. FIG. 2 is a schematic view of a mechanism located on a torque transmission path of the motorcycle 1.

As shown in FIG. 1 or FIG. 2, the motorcycle 1 is provided with an engine 30, a primary speed reducing mechanism 36, a clutch 40, a secondary speed reducing mechanism 50, a front wheel 2, and a rear wheel 3, besides the gear change control device 10.

As shown in FIG. 1, the front wheel 2 is located at a front part of a vehicle body, and supported by a lower end of a front fork 4. Handlebars 5 are connected to the top of the front fork 4. An accelerator grip 5a to be gripped by a rider is mounted to the right end of the handlebars 5. The accelerator grip 5a is connected to a throttle valve 37a provided in a throttle body 37 (see FIG. 2). The throttle valve 37a is opened according to a rider's accelerator operation, and a certain amount of air, which depends on the opening of the throttle valve 37a, is delivered to the engine 30. The motorcycle 1 may be provided with an electronically-controlled throttle device. In this case, there are provided a sensor for detecting a rider's accelerator operation and an actuator for rotating the throttle valve 37a according to the accelerator operation detected by the sensor.

As shown in FIG. 2, the engine 30 has a cylinder 31, a piston 32, an intake port 33, and a crankshaft 34. The throttle body 37 is connected to the intake port 33 via an intake pipe 35.

The throttle valve 37a is placed in an intake passage of the throttle body 37. Mixture of air, which flows through the intake passage of the throttle body 37, and fuel, which is supplied from a fuel supply device (not shown; for example, injector or carburetor), is delivered to an interior of the cylinder 31. Burning the air-fuel mixture causes the piston 32 to reciprocate within the cylinder 31. The reciprocating motion of the piston 32 is converted into rotating motion by the crankshaft 34, thereby outputting torque from the engine 30.

The primary speed reducing mechanism 36 includes: a drive-side primary reduction gear 36a, which operates in conjunction with the crankshaft 34; and a driven-side primary reduction gear 36b, which meshes with the primary reduction gear 36a. The primary speed reducing mechanism 36 decelerates the rotation of the crankshaft 34 according to a gear ratio between these gears.

The clutch 40 transmits and shuts off torque outputted from the engine 30 to the downstream side in the torque transmission path. The clutch 40 is a friction clutch, for example, and is provided with a drive-side member 41 and a driven-side member 42. The drive-side member 41 includes a friction disk, for example, and rotates together with the primary reduction gear 36b. The driven-side member 42 includes a clutch disk, for example, and rotates together with a main shaft 52. The drive-side member 41 and the driven-side member 42 are pressed against each other by elastic force of a clutch spring 44 at the time of engaging the clutch 40, so that the torque of the engine 30 is transmitted from the drive-side member 41 to the driven-side member 42. Also, when the clutch 40 is disengaged, the driven-side member 42 is moved away from the drive-side member 41, so that torque transmission from the drive-side member 41 is interrupted. The gear change control device 10 is provided with a clutch actuator 14 to be discussed later. The clutch actuator 14 performs engaging operation of the clutch 40 (switching the clutch 40 from the disengaged state to the engaged state) and disengaging operation thereof (switching the clutch 40 from the engaged state to the disengaged state).

The secondary speed reducing mechanism 50 is designed to decelerate the rotation of the main shaft 52 and transmit the decelerated rotation to an axle 3a of the rear wheel 3. In this example, the secondary speed reducing mechanism 50 is provided with a gearbox 51 and a transmission mechanism 57. The gearbox 51 is a mechanism to change deceleration ratios, such as a constant-mesh gearbox and a selective-sliding gearbox.

The gearbox 51 has on the main shaft 52 plural shift gears 53a (for example, first-speed gear, second-speed gear, third/fourth-speed gear) and shift gears 53b (for example, fifth-speed gear and sixth-speed gear). Also, the gearbox 51 has on a countershaft 55 plural shift gears 54a (for example, first-speed gear, second-speed gear, thirdtfourth-speed gear) and shift gears 54b (for example, fifth-speed gear and sixth-speed gear). The shift gears 53a are spline-connected to the main shaft 52 and operate in conjunction with the main shaft 52. The shift gears 54a are provided such that they run idle with respect to the countershaft 55, and mesh with the shift gears 53a, respectively. The shift gears 53b are provided such that they run idle with respect to the main shaft 52. The shift gears 54b mesh with the corresponding shift gears 53b, respectively, while being spline-connected to the countershaft 55 to operate in conjunction with the countershaft 55.

The gearbox 51 is also provided with a gearshift mechanism 56. The gearshift mechanism 56 includes a shift fork and a shift drum, for example, and selectively moves the shift gears 53a, 53b, 54a, 54b in the axial direction of the main shaft 52 or the countershaft 55. Then, the gearshift mechanism 56 causes the shift gears 53b, 54a, which are provided to run idle with respect to the corresponding shafts, to connect with the adjacent shift gears 53a, 54b, which operate in conjunction with the corresponding shafts. This changes the shift gears 53a, 53b, 54a, 54b to transmit torque from the main shaft 52 to the countershaft 55. The gearshift mechanism 56 is actuated by power inputted from a shift actuator 16 to be discussed later.

The transmission mechanism 57 is designed to decelerate the rotation of the countershaft 55 and transmit the decelerated rotation to the axle 3a of the rear wheel 3. In this example, the transmission mechanism 57 includes: a drive-side member 57a (for example, drive-side sprocket), which operates in conjunction with the countershaft 55; a driven-side member 57b (for example, driven-side sprocket), which operates in conjunction with the axle 3a; and a transmission member 57c (for example, chain), which transmits torque from the drive-side member 57a to the driven-side member 57b.

Torque outputted from the engine 30 is transmitted to the drive-side member 41 of the clutch 40 via the primary speed reducing mechanism 36. The torque transmitted to the drive-side member 41 is transmitted to the axle 3a of the rear wheel 3 via the driven-side member 42, the gearbox 51, and the transmission mechanism 57, in the case that the clutch 40 is engaged or the drive-side member 41 and the driven-side member 42 contact each other, that is, the clutch 40 is in a half-clutch state.

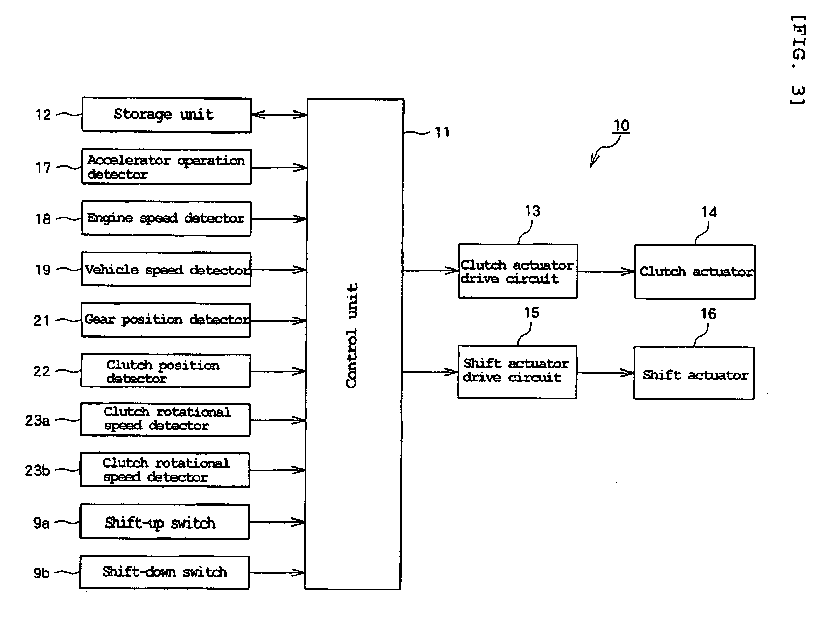

Now, the configuration of the gear change control device 10 is described. The motorcycle 1 is a semi-automatic vehicle which changes the shift gears of the gearbox 51 without the need for the rider to operate the clutch. The gear change control device 10 controls the degree of engagement of the clutch 40 (relative positions of the drive-side member 41 and the driven-side member 42), and changes the shift gears 53a, 53b, 54a, 54b. FIG. 3 is a block diagram showing the configuration of the gear change control device 10. As shown in FIG. 3, the gear change control device 10 is provided with a control unit 11, a storage unit 12, a clutch actuator drive circuit 13, a clutch actuator 14, a shift actuator drive circuit 15, a shift actuator 16, an accelerator operation detector 17, an engine speed detector 18, a vehicle speed detector 19, a gear position detector 21, a clutch position detector 22, and clutch rotational speed detectors 23a, 23b. The control unit 11 is connected to a shift-up switch 9a and a shift-down switch 9b.

The control unit 11 includes a central processing unit (CPU), and controls the degree of engagement of the clutch 40 and the speed reduction ratios of the gearbox 51 in accordance with programs stored in the storage unit 12 in response to a gear change operation by the rider (in this example, operation to turn on the shift-up switch 9a or the shift-down switch 9b). The processing executed by the control unit 11 will be discussed in detail later.

The storage unit 12 includes a nonvolatile memory and a volatile memory. The storage unit 12 stores in advance programs executed by the control unit 11 and tables and expressions used in the processing executed by the control unit 11. These tables and expressions will be discussed in detail later.

The clutch actuator drive circuit 13 supplies drive voltage or drive current to the clutch actuator 14 in accordance with a control signal inputted from the control unit 11. The clutch actuator 14 includes, for example, a motor and a power transmission mechanism (such as hydraulic path or wire), and is driven by electric power supplied from the clutch actuator drive circuit 13. In this example, the clutch actuator 14 presses a push rod 43 and releases the pressed push rod 43. When the push rod 43 is pressed by the clutch actuator 14, the push rod 43 moves the drive-side member 41 and the driven-side member 42 away from each other against the elastic force of the clutch spring 44, so that the clutch 40 is disengaged. In contrast, when the pressed push rod 43 is released by the clutch actuator 14, the push rod 43 returns to its original position (the position at the time when the clutch 40 is engaged) using the elastic force of the clutch spring 44. Thus, the drive-side member 41 and the driven-side member 42 approach each other, so that the clutch 40 is engaged. In addition, the clutch actuator 14 brings the clutch 40 into a half-clutch state during engaging operation of the clutch 40. When the clutch 40 is in a half-clutch state, only part of the torque of the engine 30 is transmitted from the drive-side member 41 to the driven-side member 42.

The shift actuator drive circuit 15 supplies drive voltage or drive current to the shift actuator 16 in accordance with a control signal inputted from the control unit 11. The shift actuator 16 includes, for example, a motor and a power transmission mechanism (such as hydraulic path or wire), and is actuated by driving power outputted from the actuator drive circuit 15. The shift actuator 16 actuates the gearshift mechanism 56 to change the shift gears 53a, 53b, 54a, 54b to transmit torque from the main shaft 52 to the countershaft 55, in order to change the deceleration ratios.

The accelerator operation detector 17 is designed to detect the amount of an accelerator operation by the rider (hereinafter referred to as accelerator displacement (for example, throttle opening)). Examples of the accelerator operation detector 17 are a throttle position sensor for detecting the throttle opening and an accelerator position sensor mounted to the accelerator grip 5a to detect the rotation angle of the accelerator grip 5a. The control unit 11 detects the accelerator displacement by the rider/driver based on a signal outputted from the accelerator operation detector 17.

The engine speed detector 18 is designed to detect the rotational speed of the engine 30 (hereinafter referred to as engine speed). Examples of the engine speed detector 18 are a crank angle sensor for outputting a pulse signal with a frequency according to the rotational speed of the crankshaft 34 or the primary reduction gears 36a, 36b and a tachogenerator for outputting a voltage signal according to the rotational speed thereof. The control unit 11 calculates the engine speed based on a signal inputted from the engine speed detector 18.

The vehicle speed detector 19 is designed to detect the vehicle speed, and outputs a signal to the control unit 11 according to, for example, the rotational speed of the axle 3a of the rear wheel 3 or that of the countershaft 55. The control unit 11 calculates the vehicle speed based on the signal. The vehicle speed detector 19 may be designed to output a signal according to the rotational speed of the main shaft 52. In this case, the control unit 11 calculates the vehicle speed not only based on the input signal, but also based on the deceleration ratio of the gearbox 51 and that of the transmission mechanism 57.

The gear position detector 21 is designed to detect the positions of the shift gears 53a, 53b, 54a, 54b provided movably in the axial direction of the countershaft 55 or the main shaft 52. An example of the gear position detector 21 is a potentiometer mounted to the gearshift mechanism 56 or the shift actuator 16. The gear position detector 21 outputs a signal to the control unit 11 according to the positions of the shift gears 53a, 53b, 54a, 54b. Based on the input signal, the control unit 11 detects that movements of the shift gears 53a, 53b, 54a, 54b that are associated with the gear change have been completed.

The clutch position detector 22 is designed to detect the degree of engagement of the clutch 40. Examples of the clutch position detector 22 are a potentiometer for outputting a signal according to the position of the push rod 43 and a potentiometer for outputting a signal according to the position or the rotation angle of the output shaft of the clutch actuator 14. The control unit 11 detects the degree of engagement of the clutch 40 based on the signal inputted from the clutch position detector 22.

The clutch rotational speed detector 23a is designed to detect the rotational speed of the drive-side member 41 of the clutch 40 (hereinafter referred to as rotational speed of the drive-side member 41). Examples of the clutch rotational speed detector 23a are a rotary encoder for outputting a pulse signal with a frequency according to the rotational speed of the drive-side member 41 and a tachogenerator for outputting a voltage signal according to the rotational speed of the drive-side member 41. Also, the clutch rotational speed detector 23b is designed to detect the rotational speed of the driven-side member 42 of the clutch 40 (hereinafter referred to as rotational speed of the driven-side member 42). Examples of the clutch rotational speed detector 23b are a rotary encoder and a tachogenerator similar to those for the clutch rotational speed detector 23a.

The shift-up switch 9a and the shift-down switch 9b are designed for the rider to give the gear change control device 10 a command to change the speed reduction ratios of the gearbox 51. These switches 9a, 9b output a signal to the control unit 11 according to the gear change command. The control unit 11 actuates the shift actuator 16 according to the input signal to change the shift gears 53a, 53b, 54a, 54b to transmit torque from the main shaft 52 to the countershaft 55. The shift-up switch 9a and the shift-down switch 9b are provided adjacent to the accelerator grip 5a, for example.

Now, description is made of the processing executed by the control unit 11. When a signal indicating a gear change command by the rider/driver is inputted from the shift-up switch 9a or the shift-down switch 9b, the control unit 11 disengages the clutch 40 and moves the shift gears 53a, 53b, 54a, 54b. Then, the control unit 11 gradually engages the clutch 40 after the shift gears 53a, 53b, 54a, 54b have completely been moved. In the example described herein, during engaging operation of the clutch 40, the control unit 11 calculates torque Tpre currently being transmitted from the drive-side member 41 to a downstream mechanism in the torque transmission path including the driven-side member 42 (such as the driven-side member 42, the secondary speed reducing mechanism 50, and the axle 3a) (hereinafter the torque is referred to as current transmission torque). Also, the control unit 11 calculates torque Tfin estimated to be transmitted from the drive-side member 41 to the downstream mechanism after the completion of engagement of the clutch 40 (when engaging operation of the clutch 40 is finished) (hereinafter the torque is referred to as post-completion transmission torque). Then, the control unit 11 controls the degree of engagement of the clutch 40 during engaging operation thereof based on the calculated current transmission torque Tpre and the calculated post-completion transmission torque Tfin.

The control unit 11 receives a next gear change command according to the difference between the current transmission torque Tpre and the post-completion transmission torque Tfin, even during engaging operation of the clutch 40. In the case where a next gear change command is received during engaging operation of the clutch 40, the control unit 11 does not complete gear change control corresponding to the gear change command inputted earlier, but disengages the clutch 40 again, moves the shift gears 53a, 53b, 54a, 54b, and then engages the clutch 40 again according to the gear change command inputted later. The processing executed by the control unit 11 is discussed in detail below.

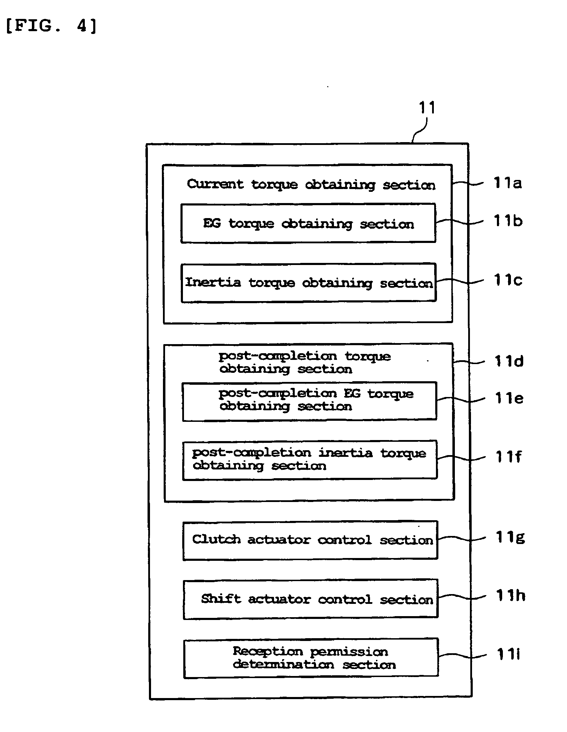

FIG. 4 is a functional block diagram of the processing executed by the control unit 11. As shown in FIG. 4, the control unit 11 includes a current torque obtaining section 11a, a post-completion torque obtaining section 11d, a clutch actuator control section 11g, a shift actuator control section 11h, and a reception permission determination section 11i. The current torque obtaining section 11a includes an EG torque obtaining section 11b and an inertia torque obtaining section 11c, and the post-completion torque obtaining section 11d includes a post-completion EG torque obtaining section 11e and a post-completion inertia torque obtaining section 11f.

Description is first made of the current torque obtaining section 11a. The current torque obtaining section 11a executes the processing for obtaining the current transmission torque Tpre. Specifically, the current torque obtaining section 11a calculates the current transmission torque Tpre based on torque TEpre currently being outputted from the engine 30 (hereinafter the torque is referred to as EG torque) and based on inertia torque TIpre produced in a mechanism upstream of the drive-side member 41 in the torque transmission path (such as the crankshaft 34, the piston 32, and the primary speed reducing mechanism 36) (hereinafter the torque is simply referred to as inertia torque). The current torque obtaining section 11a executes this processing in a preset sampling cycle (for example, several milliseconds) during engaging operation of the clutch 40. The current transmission torque Tpre is described herein as torque being transmitted to the driven-side member 42 in the downstream mechanism described above.

Description is first made of the processing for obtaining the EG torque TEpre. The storage unit 12 stores in advance a table that correlates the EG torque TEpre with the engine speed and the accelerator displacement (hereinafter the table is referred to as EG torque table). Then, the EG torque obtaining section 11b detects the accelerator displacement based on the signal inputted from the accelerator operation detector 17, and detects the engine speed based on the signal inputted from the engine speed detector 18. Then, the EG torque obtaining section 11b refers to the EG torque table to obtain the EG torque TEpre corresponding to the detected accelerator displacement and the detected engine speed.

In place of the EG torque table, the storage unit 12 may store in advance an expression that defines the relationship among the engine speed, the accelerator displacement, and the EG torque TEpre (hereinafter the expression is referred to as EG torque relational expression). In this case, the EG torque obtaining section 11b substitutes the detected engine speed and the detected accelerator displacement into the EG torque relational expression to calculate the EG torque TEpre.

Alternatively, the EG torque obtaining section 11b may obtain the EG torque TEpre based on the pressure of air flowing through the interior of the intake pipe 35 (hereinafter the pressure is referred to as intake pressure). For example, the storage unit 12 may store a table that correlates the EG torque TEpre with the intake pressure and the engine speed. In addition, a pressure sensor for outputting a signal according to the intake pressure is disposed in the intake pipe 35. In this case, the EG torque obtaining section 11 b detects the engine speed, and the intake pressure based on the signal inputted from the pressure sensor, at the time when the crank angle becomes a predetermined value (for example, at the end of intake stroke). Then, the EG torque obtaining section 11 b refers to the table stored in the storage unit 12 to obtain the EG torque TEpre corresponding to the detected intake pressure and the detected engine speed.

The inertia torque TIpre is determined according to the variation in engine speed $\Omega e$ per unit time ($d\Omega e / dt$, hereinafter referred to as rate-of-change of EG speed). The storage unit 12 stores in advance an expression that associates the inertia torque TIpre and the rate-of-change of EG speed ($d\Omega e / dt$). Specifically, the storage unit 12 stores in advance an expression that defines the inertia torque TIpre as a value ($I \times (d\Omega e / dt)$) obtained by multiplying the inertial moment I of the mechanism upstream of the drive-side member 41 by the rate-of-change of EG speed ($d\Omega e / dt$). In this case, the inertia torque obtaining section 11c calculates the rate-of-change of EG speed ($d\Omega e / dt$) based on the signal inputted from the engine speed detector 18. Then, the inertia torque obtaining section 11c multiplies the rate-of-change of EG speed ($d\Omega e / dt$) by the inertial moment I of the mechanism upstream of the drive-side member 41 (hereinafter simply referred to as inertial moment), and defines the multiplication result ($I \times (d\Omega e / dt)$) as the inertia torque TIpre. The storage unit 12 may store in advance a table that correlates the rate-of-change of EG speed ($d\Omega e / dt$) and the inertia torque TIpre. In this case, the inertia torque obtaining section 11c refers to the table to obtain the inertia torque TIpre corresponding to the rate-of-change of EG speed ($d\Omega e / dt$).

As described above, the current torque obtaining section 11a obtains the current transmission torque Tpre based on the EG torque TEpre and the inertia torque TIpre. For example, the storage unit 12 may store in advance an expression that defines the relationship among the current transmission torque Tpre, the EG torque TEpre, and the inertia torque TIpre, and the current torque obtaining section 11a may substitute the EG transmission torque TEpre and the inertia torque TIpre obtained by the processing described above into the expression, in order to calculate the current transmission torque Tpre. For example, the storage unit 12 may store the following expression (1):

$$\mathrm{Tpre} = (\mathrm{TEpre} - \mathrm{TIpre}) \times \mathrm{Pratio} \dots (1)$$

where Pratio is the gear ratio of the primary speed reducing mechanism 36 (Pratio = the number of teeth of the driven-side primary reduction gear 36b / the number of teeth of the drive-side primary reduction gear 36a).

The processing for calculating the current transmission torque Tpre is not limited to the aforementioned processing. For example, the storage unit 12 may store in advance a table or an expression that correlates the current transmission torque Tpre with the engine speed, the accelerator displacement, and the rate-of-change of EG speed. In this case, the current torque obtaining section 11 a can use the table or the expression to directly obtain the current transmission torque Tpre from the engine speed, the rate-of-change of EG speed, and the accelerator displacement.

Now, description is made of the processing executed by the post-completion torque obtaining section 11 d. The post-completion torque obtaining section 11 d executes the processing for obtaining the post-completion transmission torque Tfin described above. Specifically, the post-completion torque obtaining section 11 d obtains the post-completion transmission torque Tfin based on the torque TEfin estimated to be outputted from the engine 30 after the completion of engagement of the clutch 40 (hereinafter referred to as post-completion EG torque) and the inertia torque TIfin estimated to be produced in the mechanism upstream of the drive-side member 41 in the torque transmission path after the completion of clutch engagement (hereinafter referred to as post-completion inertia torque).

Description is first made of the processing for estimating the post-completion EG torque TEfin. The post-completion EG torque obtaining section 11e estimates the engine speed after the completion of clutch engagement based on the rotational speed of the driven-side member 42 or a mechanism downstream of the driven-side member 42. Then, the post-completion EG torque obtaining section 11e estimates the post-completion EG torque TEfin based on the estimated engine speed and based on the accelerator displacement.

For example, the post-completion EG torque obtaining section 11e detects the current rotational speed of the driven-side member 42 and the rotational speed of the drive-side member 41, in order to calculate the difference in rotational speed between these members (hereinafter referred to as clutch rotational speed difference Ωdiff). Also, the post-completion EG torque obtaining section 11e calculates the current engine speed Ωe. Then, the post-completion EG torque obtaining section 11e substitutes the calculated clutch rotational speed difference Ωdiff and the calculated engine speed Ωe into the expression stored in advance in the storage unit 12, to define the obtained value as the engine speed Ωfin after the completion of clutch engagement. For example, the post-completion EG torque obtaining section 11e may substitute the current clutch rotational speed difference Ωdiff and the engine speed Ωe into the following expression (2), to define the obtained value as the engine speed Ωfin after the completion of clutch engagement.

$$\Omega fin = \Omega e - (\Omega diff \times Pratio) \ ... \ (2)$$

Also, the post-completion EG torque obtaining section 11e detects the accelerator displacement based on the signal inputted from the accelerator operation detector 17. Then, the post-completion EG torque obtaining section 11e defines torque corresponding to the engine speed Ωfin and the accelerator displacement as the post-completion EG torque TEfin using, for example, the EG torque table described above.

Now, description is made of the processing for estimating the post-completion inertia torque TIfin. The post-completion inertia torque obtaining section 11 f estimates the post-completion inertia torque TIfin based on the current rate-of-change of rotational speed of the mechanism provided downstream of the drive-side member 41 in the torque transmission path (such as the driven-side member 42, the countershaft 55, and the axle 3a) (variation in rotational speed per unit time (hereinafter referred to as rate-of-change of rotational speed)).

The processing for estimating the post-completion inertia torque TIfin is described herein using the driven-side member 42 in the mechanism downstream of the drive-side member 41 as an example. The post-completion inertia torque obtaining section 11f calculates the current rate-of-change of rotational speed (dΩcl / dt) of the driven-side member 42. Then, the post-completion inertia torque obtaining section 11f substitutes the calculated rate-of-change of rotational speed (dΩcl /dt) of the driven-side member 42 into the following expression (3), for example, to calculate the post-completion inertia torque TIfin.

$$TIfin = I \times (d\Omega cl \ / \ dt) \times Pratio \ ... \ (3)$$

The storage unit 12 stores in advance an expression that defines the relationship between the rate-of-change of rotational speed (dΩcl / dt) and the post-completion inertia torque TIfin.

The post-completion inertia torque obtaining section 11f may estimate the post-completion inertia torque TIfin based on the rate-of-change of rotational speed of a component such as the countershaft 55 or the axis 3a rather than based on the rate-of-change of rotational speed (dΩcl / dt) of the driven-side member 42. In this case, the post-completion inertia torque obtaining section 11f multiplies the rate-of-change of rotational speed of such a component by the gear ratio of the mechanism located between the component and the engine 30 (for example, the gear ratio of the gearbox 51 and the gear ratio of the primary speed reducing mechanism 36 after the completion of engagement of the clutch 40), in order to calculate the post-completion inertia torque TIfin.

The post-completion inertia torque obtaining section 11f calculates the rate-of-change of rotational speed (dΩcl /dt) of the driven-side member 42 by the processing described above in a predetermined sampling cycle during engaging operation of the clutch 40, in order to sequentially calculate the post-completion inertia torque TIfin based on the calculated rate-of-change of rotational speed (dΩcl / dt). Alternatively, the post-completion inertia torque obtaining section 11f may continuously use the rate-of-change of rotational speed (dΩcl/dt) calculated immediately before the clutch 40 is disengaged (for example, several hundred milliseconds before the clutch 40 starts being disengaged) in the processing executed by the clutch actuator control section 11g, rather than calculating the rate-of-change of rotational speed (dΩcl /dt) in a predetermined sampling cycle. The processing executed by the clutch actuator control section 11 g will be discussed later.

Now, description is made of the processing for calculating the post-completion transmission torque Tfin. The post-completion torque obtaining section 11 d substitutes the post-completion EG torque TEfin and the post-completion inertia torque TIfin calculated as described above into an expression that defines the relationship between these torques and the post-completion transmission torque Tfin, in order to calculate the post-completion transmission torque Tfin. For example, the post-completion torque obtaining section 11d substitutes the post-completion EG torque TEfin and the post-completion inertia torque TIfin into the following expression (4) to calculate the post-completion transmission torque Tfin.

$$Tfin = (TEfin - TIfin) \times Pratio \ ... \ (4)$$

The post-completion torque obtaining section 11 d may calculate the post-completion transmission torque Tfin based on the calculation result of the expression (4) and a preset correction value. For example, the post-completion torque obtaining section 11 d may define the value obtained by multiplying (TEfin - Tlfin) $\times$ Pratio in the expression (4) by a correction value k as the post-completion transmission torque Tfin. For example, the correction value k is determined according to the accelerator displacement by the rider, for example, and set so as to increase in proportion to the accelerator displacement, for example.

Now, description is made of the processing executed by the clutch actuator control section 11 g. The clutch actuator control section 11 g actuates the clutch actuator 14 to control the degree of engagement of the clutch 40 based on the current transmission torque Tpre obtained by the current torque obtaining section 11a and the post-completion transmission torque Tfin estimated by the post-completion torque obtaining section 11 d. The clutch actuator control section 11 g executes the following processing, for example.

The storage unit 12 stores in advance an expression that defines the relationship between the difference between the current transmission torque Tpre and the post-completion transmission torque Tfin (hereinafter referred to as torque deviation) and the actuation amount of the clutch actuator 14 (hereinafter the expression is referred to as actuation amount relational expression). The clutch actuator control section 11 g calculates the torque deviation (Tfin - Tpre) every time the current torque obtaining section 11 a calculates the current transmission torque Tpre. Then, the clutch actuator control section 11 g substitutes the torque deviation (Tfin - Tpre) into the actuation amount relational expression in order to calculate the amount by which the clutch actuator 14 is to be actuated (hereinafter the amount is referred to as command actuation amount) and output a control signal to the clutch actuator drive circuit 13 according to the command actuation amount. The clutch actuator drive circuit 13 supplies driving power to the clutch actuator 14 according to the input control signal.

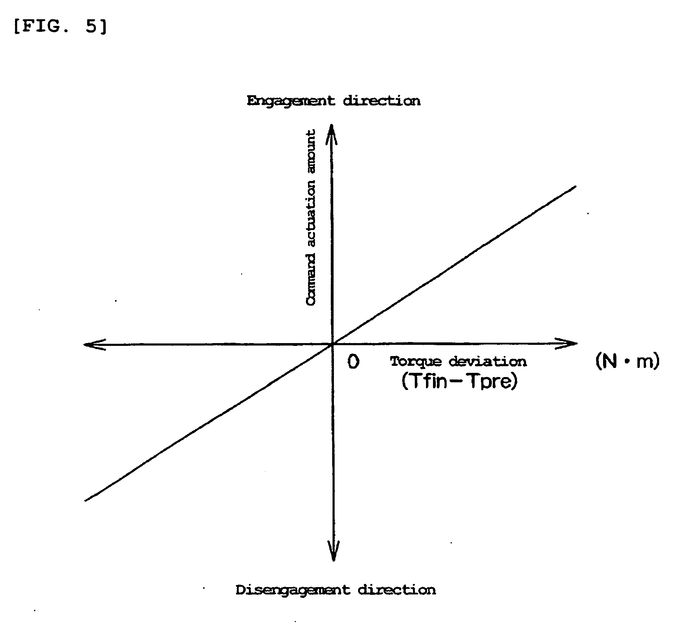

FIG. 5 is a graph showing the relationship between the torque deviation (Tfin - Tpre) and the command actuation amount obtained from the actuation amount relational expression. In the example shown in FIG. 5, the actuation amount relational expression is established such that if the torque deviation (Tfin - Tpre) is positive, the clutch actuator 14 is actuated in the direction to engage the clutch 40. In contrast, the actuation amount relational expression is established such that if the torque deviation (Tfin - Tpre) is negative, the clutch actuator 14 is actuated in the direction to disengage the clutch 40. In addition, the actuation amount relational expression is established such that the command actuation amount increases in proportion to the torque deviation (Tfin - Tpre).

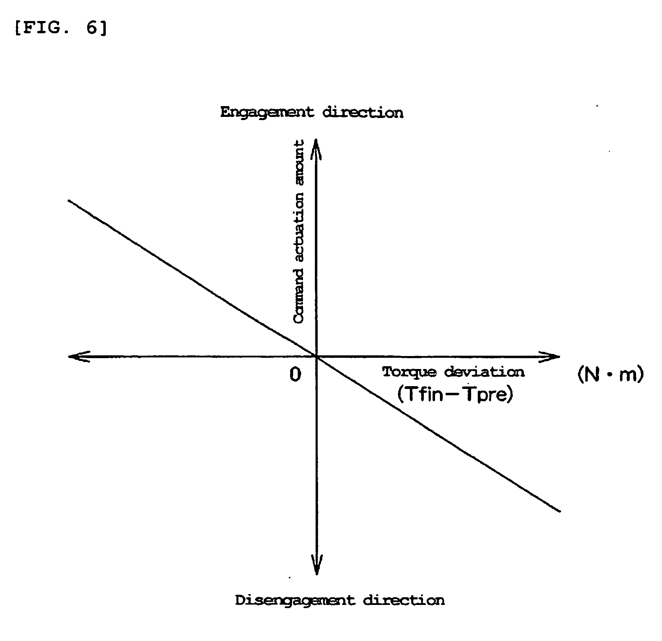

The storage unit 12 stores two actuation amount relational expressions: one expression is to actuate the clutch actuator 14 in the direction to engage the clutch 40 when the torque deviation (Tfin - Tpre) is positive as shown in FIG. 5 (hereinafter the expression is referred to as engagement actuation amount relational expression); and the other expression is to actuate the clutch actuator 14 in the direction to disengage the clutch 40 (hereinafter the expression is referred to as disengagement actuation amount relational expression). FIG. 6 is a graph showing the relationship between the torque deviation (Tfin - Tpre) and the command actuation amount obtained from the disengagement actuation amount relational expression. In the graph shown in FIG. 6, the actuation amount relational expression is established such that if the torque deviation (Tfin - Tpre) is positive, the clutch actuator 14 is actuated in the direction to disengage the clutch 40, in contrast to the graph shown in FIG. 5.

The clutch actuator control section 11 g selects either the engagement actuation amount relational expression or the disengagement actuation amount relational expression depending on whether the clutch rotational speed difference is positive or negative. Specifically, if the clutch rotational speed difference is positive, the clutch actuator control section 11 g selects the engagement actuation amount relational expression to substitute the torque deviation (Tfin - Tpre) into the engagement actuation amount relational expression. On the contrary, if the clutch rotational speed difference is negative, the clutch actuator control section 11g selects the disengagement actuation amount relational expression to substitute the torque deviation (Tfin - Tpre) into the disengagement actuation amount relational expression.

By allowing the clutch actuator control section 11 g to selectively use the engagement actuation amount relational expression and the disengagement actuation amount relational expression depending on the clutch rotational speed difference, an engine brake can be applied on a downhill slope, for example. For example, as a result of the accelerator displacement being set to zero on a downhill slope, the post-completion transmission torque Tfin is occasionally negative. At this time, if the clutch 40 is disengaged, the current transmission torque Tpre is zero, and therefore the torque deviation (Tfin - Tpre), which is the difference between the post-completion transmission torque Tfin and the current transmission torque Tpre, is negative. Also, in the case where the rotational speed of the driven-side member 42 is faster than that of the drive-side member 41, the disengagement actuation amount relational expression is selected. As a result, the command actuation amount corresponding to the torque deviation (Tfin - Tpre) is a value in the direction to engage the clutch 40, thereby applying an engine brake.

Alternatively, in place of the engagement actuation amount relational expression and the disengagement actuation amount relational expression, the storage unit 12 may store a table that correlates the command actuation amount with the post-completion transmission torque Tfin and the current transmission torque Tpre. In this case, the clutch actuator control section 11 g refers to the table to directly obtain the command actuation amount corresponding to the post-completion transmission torque Tfin and the current transmission torque Tpre, without calculating the difference between the post-completion transmission torque Tfin and the current transmission torque Tpre.

When a gear change command is inputted in the state where execution of gear change control is permitted in the processing executed by the reception permission determination section 11i, the clutch actuator control section 11 g first disengages the clutch 40 to temporarily interrupt torque transmission from the drive-side member 41 to the driven-side member 42. The processing executed by the reception permission determination section 11 i will be discussed later. After that, the clutch actuator control section 11 g detects that some of the shift gears 53a, 53b, 54a, 54b corresponding to the gear change command have completely been moved based on the signal inputted from the gear position detector 21, and then starts the aforementioned control to engage the clutch 40.

Now, description is made of the processing executed by the shift actuator control section 11 h. When a gear change command by the rider is inputted in the state where execution of gear change control is permitted in the processing executed by the reception permission determination section 11 i, the shift actuator control section 11 h actuates the shift actuator 16 to change the shift gears 53a, 53b, 54a, 54b. The processing executed by the reception permission determination section 11i will be discussed later. Specifically, after detecting that the clutch 40 has been disengaged based on the signal inputted from the clutch position detector 22, the shift actuator control section 11 h outputs a control signal to the shift actuator drive circuit 15 according to the gear change command. The shift actuator 16 is actuated by driving power supplied from the shift actuator drive circuit 15 according to the control signal in order to move some of the shift gears 53a, 53b, 54a, 54b.

Now, description is made of the processing executed by the reception permission determination section 11 i. In the case where a next gear change command is inputted subsequently to a first gear change command during engaging operation of the clutch 40, the reception permission determination section 11i determines whether or not to receive the next gear change command and perform gear change control according to the gear change command according to the difference between the current transmission torque Tpre and the post-completion transmission torque Tfin, that is, the torque deviation (Tfin - Tpre). Specifically, the reception permission determination section 11i determines whether or not the torque deviation (Tfin - Tpre) satisfies a predetermined condition (hereinafter referred to as reception permission condition).

The reception permission condition herein is that the torque deviation (Tfin - Tpre) is less than a predetermined value (hereinafter referred to as reception permission torque deviation (for example, a value close to zero)), for example. Alternatively, the reception permission condition may be that the torque deviation (Tfin - Tpre) is continuously less than the reception permission torque deviation for a predetermined time (hereinafter referred to as reception permission condition time) or more during engaging operation of the clutch 40.

Different reception permission conditions may be adopted depending on whether the gear change command inputted during engaging operation of the clutch 40 is a gear change command for a shift-up or a gear change command for a shift-down. For example, the reception permission condition time adopted for a shift-down may be longer than that adopted for a shift-up. This extends the time for which the rider senses deceleration at the shift gear corresponding to the first gear change command at a shift-down compared to a shift-up, thereby improving the riding comfort of the vehicle at gear changes.

In the case where the current transmission torque Tpre and the post-completion transmission torque Tfin satisfy the reception permission condition, the reception permission determination section 11 i stores in the storage unit 12 information indicating that the start of gear change control according to the gear change command inputted subsequently is allowed even during execution of gear change control according to the first gear change command. For example, the reception permission determination section 11i sets on a flag indicating that the start of gear change control is allowed (hereinafter referred to as permission flag). In this case, the reception permission determination section 11i sets off the permission flag at the time when the current transmission torque Tpre and the post-completion transmission torque Tfin do not satisfy the reception permission condition any more.

Also, when a first gear change command is inputted and gear change control is started, the reception permission determination section 11i may store in the storage unit 12 information indicating that the reception of a next gear change command is restricted. For example, the reception permission determination section 11i may set on a flag indicating that the reception of a gear change command is restricted (hereinafter referred to as prohibition flag). In this case, the reception permission determination section 11i sets off the prohibition flag at the time when the current transmission torque Tpre and the post-completion transmission torque Tfin have come to satisfy the reception permission condition.

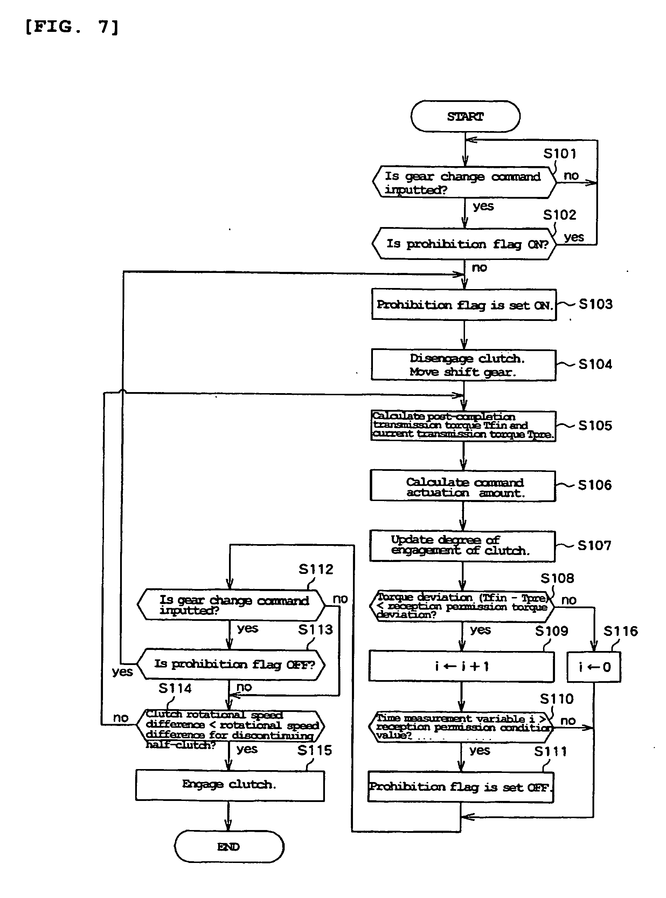

Now, description is made of the flow of the processing executed by the control unit 11. FIG. 7 is a flowchart showing an example of the processing executed by the control unit 11. In the example described herein, the reception permission determination section 11i measures the elapsed time since the torque deviation (Tfin - Tpre) becomes less than the reception permission torque deviation using a variable i that increments by one in each sampling cycle of the current transmission torque Tpre (hereinafter referred to as time measurement variable). The time measurement variable i is initially set to zero. Also, in this example, in the case where the current transmission torque Tpre and the post-completion transmission torque Tfin do not satisfy the reception permission condition described above, the storage unit 12 stores the prohibition flag indicating that the reception of a next gear change command is restricted.

First, the reception permission determination section 11 i determines whether or not a gear change command is inputted from the shift-up switch 9a or the shift-down switch 9b (S101). If a gear change command is not inputted, the control unit 11 waits for a gear change command. On the other hand, if a gear change command is inputted, the reception permission determination section 11 i determines whether or not the prohibition flag is set on (S102). If the prohibition flag is set on, the reception permission determination section 11 i returns to S101. On the other hand, if the prohibition flag is set off, the reception permission determination section 11i sets on the prohibition flag (S103). In addition, the clutch actuator control section 11g actuates the clutch actuator 14 to disengage the clutch 40, and the shift actuator control section 11 h moves some of the shift gears 53a, 53b, 54a, 54b corresponding to the gear change command after detecting that the clutch 40 has been disengaged (S104).

After that, the post-completion torque obtaining section 11 d calculates the post-completion transmission torque Tfin, and the current torque obtaining section 11a calculates the current transmission torque Tpre (S105). Then, the clutch actuator control section 11g substitutes the torque deviation (Tfin - Tpre) into the aforementioned engagement actuation amount relational expression or the disengagement actuation amount relational expression described above (see FIG. 5 or FIG. 6) to calculate the command actuation amount for the clutch actuator 14 (S106). As described above, if the clutch rotational speed difference is positive (if the rotational speed of the drive-side member 41 is more than that of the driven-side member 42), the clutch actuator control section 11 g substitutes the torque deviation (Tfin - Tpre) into the engagement actuation amount relational expression. On the contrary, if the clutch rotational speed difference is negative (if the rotational speed of the drive-side member 41 is less than that of the driven-side member 42), the clutch actuator control section 11 g substitutes the torque deviation (Tfin - Tpre) into the disengagement actuation amount relational expression. The clutch actuator control section 11 g outputs a control signal to the clutch actuator drive circuit 13 according to the command actuation amount to change the degree of engagement of the clutch 40 (step S107). This brings the clutch 40 into a half-clutch state, in which the degree of engagement is gradually changed.

After that, the reception permission determination section 11 i performs the processing for determining whether or not the reception permission condition described above is satisfied. Specifically, the reception permission determination section 11 i first determines whether or not the torque deviation (Tfin - Tpre) is less than the reception permission torque deviation (S108). If the torque deviation (Tfin - Tpre) is less than the reception permission torque deviation, the reception permission determination section 11 i increments the time measurement variable i (S109), and determines whether or not the time measurement variable i exceeds a predetermined value (hereinafter referred to as reception permission condition value) (S110). If the time measurement variable i has already exceeded the reception permission condition value, the reception permission determination section 11 i judges that the torque deviation (Tfin - Tpre) has continuously been less than the reception permission torque deviation for the reception permission condition time described above or more, and sets off the prohibition flag in the storage unit 12 (S111). After that, the reception permission determination section 11 i determines whether or not a next gear change command is inputted (S112).

On the other hand, if the torque deviation (Tfin - Tpre) is not less than the reception permission torque deviation in S108, the reception permission condition is not satisfied. Therefore, the reception permission determination section 11 resets the time measurement variable i to zero (S116), and proceeds to the processing in S112 without setting off the prohibition flag in the storage unit 12. Also, if the time measurement variable i has not exceeded the reception permission condition value yet in S110, the reception permission condition is not satisfied. Therefore, the reception permission determination section 11i proceeds to the processing in S112 without setting off the prohibition flag.

If a next gear change command is not inputted in S112, the clutch actuator control section 11g calculates the clutch rotational speed difference, and determines whether or not the calculated rotational speed difference is less than the rotational speed difference for discontinuing half-clutch (step S114). If the clutch rotational speed difference is less than the rotational speed difference for discontinuing half-clutch, the clutch actuator control section 11 g completely engages the drive-side member 41 and the driven-side member 42, and discontinues the half-clutch state (S115), to complete the gear change control.

On the other hand, if a gear change command is inputted in S112 even during engaging operation of the clutch 40, the reception permission determination section 11i determines whether or not the prohibition flag in the storage unit 12 is set off (S113). If the prohibition flag in the storage unit 12 is still set on, the operating state of the vehicle (the degree of engagement of the clutch 40) is not suitable to start gear change control according to the gear change command inputted in S112. Therefore, the control unit 11 proceeds to the processing in S114 without responding to the gear change command. On the other hand, if the prohibition flag in the storage unit 12 is set off in S113, the control unit 11 returns to the processing in S103 to start gear change control according to the gear change command. The control unit 11 repeats the above processing in a predetermined cycle (for example, several milliseconds) until the half-clutch state is discontinued in S115. The aforementioned processing is an example of the processing executed by the control unit 11 at gear changes.

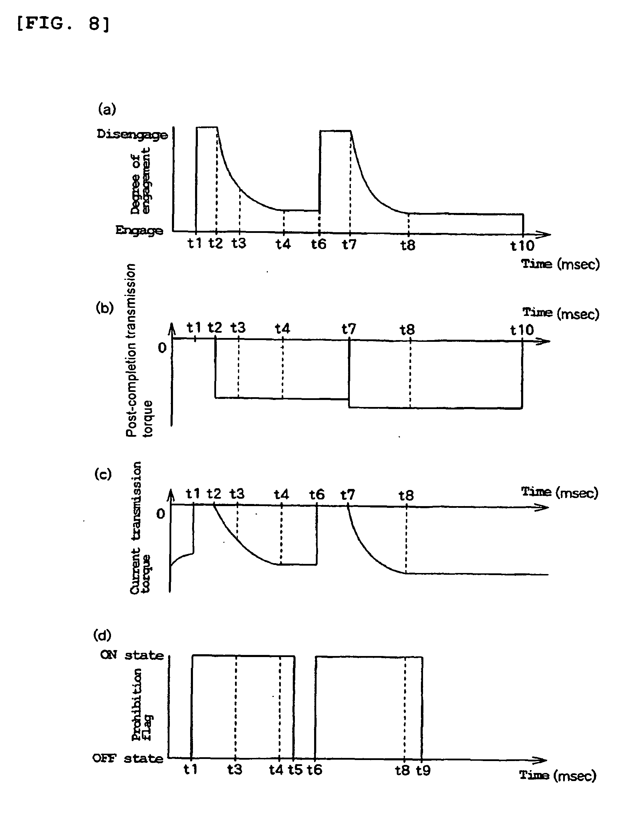

Now, description is made of the results of the processing executed by the control unit 11. FIG. 8 is a time chart showing examples of the results of the processing executed at gear changes, wherein FIG. 8(a) shows changes over time in the degree of engagement of the clutch 40, FIG. 8(b) shows changes over time in the post-completion transmission torque Tfin, FIG. 8(c) shows changes over time in the current transmission torque Tpre, and FIG. 8(d) shows the ON/OFF state of the prohibition flag. In the example to be described, the rider commands a shift-down, and an engine brake is applied, that is, the current transmission torque Tpre transmitted from the drive-side member 41 to the driven-side member 42 of the clutch 40 is negative. Also, in the example to be described, a shift-down is commanded twice during engaging operation of the clutch 40.

When a signal to command a gear change is inputted from the shift-down switch 9b at the time t1, the clutch actuator control section 11 g executes the processing to disengage the clutch 40 as shown in FIG. 8(a). At this time, the reception permission determination section 11 i executes the processing to set on the prohibition flag as shown in FIG. 8(d). In addition, the current transmission torque Tpre transmitted from the drive-side member 41 to the driven-side member 42 of the clutch 40 becomes zero as shown in FIG. 8(c).

After that, when some of the shift gears 53a, 53b, 54a, 54b have completely been moved in the processing executed by the shift actuator control section 11 h at the time t2, torque estimated to be transmitted to the driven-side member 42 after the completion of engaging operation of the clutch 40 (when the drive-side member 41 and the driven-side member 42 have completely been engaged) corresponding to the first gear change command (the gear change command inputted at the time t1) is set as the post-completion transmission torque Tfin in the processing executed by the post-completion torque obtaining section 11 d, as shown in FIG. 8(b). Then, the clutch actuator control section 11 g executes the processing to actuate the clutch actuator 14 according to the difference between the post-completion transmission torque Tfin and the current transmission torque Tpre, in order to bring the clutch 40 into a half-clutch state as shown in FIG. 8(a). The difference between the current transmission torque Tpre being transmitted to the drive-side member 42 and the post-completion transmission torque Tfin becomes gradually smaller as shown in FIGs. 8(b) and 8(c).

When another gear change command is inputted at the time t3, gear change control corresponding to this gear change command is not started at this time because the prohibition flag is still set on as shown in FIG.

8(d). When the current transmission torque Tpre reaches the post-completion transmission torque Tfin at the time t4, and the torque deviation, or the difference between them, becomes less than reception permission torque deviation, the reception permission determination section 11i measures the time since the torque deviation becomes less than the reception permission torque deviation. Then, when it is judged that the elapsed time has become the reception permission condition time or more at the time t5, the prohibition flag is set off as shown in FIG. 8(d). Since the current transmission torque Tpre has reached the post-completion transmission torque Tfin at the time T4, the rider can sense deceleration at the shift gear corresponding to the gear change command inputted first (the command inputted at the time t1) after the time t4.

After that, when a gear change command is inputted again at the time t6, gear change control corresponding to the gear change command is started since the prohibition flag is set off. As a result, the clutch actuator control section 11 g disengages the clutch 40 again as shown in FIG. 8(a), and the current transmission torque Tpre becomes zero again as shown in FIG. 8(c). Also, at this time, the reception permission determination section 11 sets on the prohibition flag again as shown in FIG. 8(d).

After that, when some of the shift gears 53a, 53b, 54a, 54b have completely been moved at the time t7, the post-completion torque obtaining section 11d sets the post-completion transmission torque Tfin estimated to be transmitted via the clutch 40 after the completion of engagement of the clutch 40 (at the time t10 in FIG. 8), as shown in FIG. 8(b). Then, the clutch actuator control section 11g executes the processing to actuate the clutch actuator 14 according to the difference between the current transmission torque Tpre and the post-completion transmission torque Tfin, in order to bring the clutch 40 closer to an engaged state. In the case where the accelerator displacement has been varied during the gear change control, a post-completion transmission torque Tfin different from that set when the first gear change command is inputted is set at the time t7, as shown in FIG. 8(b). After that, the clutch 40 is brought into a half-clutch state as shown in FIG. 8(a), and the difference between the current transmission torque Tpre and the post-completion transmission torque Tfin becomes gradually smaller as shown in FIGs. 8(b) and 8(c).

After that, when the current transmission torque Tpre reaches the post-completion transmission torque Tfin at the time t8, and the torque deviation becomes less than reception permission torque deviation, the reception permission determination section 11i measures the elapsed time since the time t8. Then, when the elapsed time since the time t8 exceeds the reception permission condition time at the time t9, the reception permission determination section 11 i executes the processing to set the prohibition flag off again as shown in FIG. 8(d). If the current transmission torque Tpre and the post-completion transmission torque Tfin coincide with each other at the time t8, the degree of engagement of the clutch 40 is maintained thereafter as shown in FIG. 8(a).

When the clutch rotational speed difference becomes less than the rotational speed difference for discontinuing half-clutch at the time t10, the clutch actuator control section 11 g completely engages the drive-side member 41 and the driven-side member 42. The gear change control by the control unit 11 is thus finished.

In the gear change control device 10 described above, after a first gear change command is inputted, a next gear change command is received according to the difference between the current transmission torque Tpre and the post-completion transmission torque Tfin. This enables control to allow the rider to sense deceleration and acceleration that will occur after the completion of engagement of the clutch 40, even before the clutch 40 is completely engaged. The gear change control device 10 can then receive the next gear change command after the rider senses deceleration or acceleration at the shift gear corresponding to the first gear change command. As a result, it is possible to improve the riding comfort of the vehicle by reducing the occurrence of deceleration and acceleration exceeding the expectation of the rider. For example, the rider can sense deceleration and acceleration at the shift gear corresponding to the gear change command inputted first, to judge the necessity for another gear change and expect deceleration and acceleration at another gear change. Consequently, it is possible to improve the riding comfort of the vehicle by reducing the occurrence of deceleration and acceleration exceeding the expectation of the rider.

In addition, in the gear change control device 10, the current torque obtaining section 11 a calculates the current transmission torque Tpre based on the EG torque TEpre being outputted from the engine 30 and the inertia torque Tlpre of the mechanism upstream of the drive-side member 41 in the torque transmission path. This allows calculation of the current transmission torque Tpre by simple processing without using a sensor for directly detecting torque or the like.

Further, in the gear change control device 10, the post-completion torque obtaining section 11 d estimates the post-completion EG torque TEfin to be outputted from the engine 30 after the completion of engagement of the clutch 40 and the post-completion inertia torque Tlfin of the mechanism upstream of the drive-side member 41 after the completion of engagement of the clutch 40, and calculates the post-completion transmission torque Tfin based on the estimated EG torque TEfin and the estimated post-completion inertia torque Tlfin. This allows calculation of the current transmission torque Tpre by simple processing. The gear change control device 10 may also execute the processing described above when gear change commands for a shift-up are successively inputted, for example, rather than when gear change commands for a shift-down are inputted as in the example described herein.

Moreover, in the gear change control device 10, the control unit 11 starts receiving a next gear change command according to the time when the difference between the current transmission torque Tpre and the post-completion transmission torque Tfin becomes a predetermined value (in the above description referred to as reception permission torque deviation) or less. This allows the rider to sense deceleration and acceleration that will occur after the completion of engagement of the clutch 40, even before the clutch 40 is completely engaged, by setting the reception permission torque deviation to a small value, for example. The gear change control device 10 then receives the next gear change command after the rider senses deceleration or acceleration at the shift gear corresponding to the first gear change command. As a result, it is possible to improve the riding comfort of the vehicle by reducing the occurrence of deceleration and acceleration exceeding the expectation of the rider.

The present teaching is not limited to the gear change control device 10 or the motorcycle 1 described above, and can be modified variously. For example, although the motorcycle 1 is provided with the engine 30 as a driving source, the driving source may be an electric motor or a hybrid engine combining an electric motor and an engine.

In addition, in the above description, the gear change control device 10 and the clutch 40 are applied to the motorcycle 1. However, the gear change control device described above may be applied to an automobile.

The description above discloses (amongst others) in order to solve the foregoing problem, an embodiment of a gear change control device including: a clutch actuator for changing a degree of engagement of a clutch; a current torque obtaining section for obtaining torque being transmitted from a drive-side member of the clutch to a downstream mechanism in a torque transmission path as current torque, the downstream mechanism including a driven-side member of the clutch; a post-completion torque obtaining section for obtaining torque estimated to be transmitted from the drive-side member to the downstream mechanism after completion of engagement of the clutch as post-completion torque; and a control unit for disengaging the clutch by actuating the clutch actuator and changing shift gears in response to a gear change command by a rider, and then controlling the degree of engagement of the clutch according to a difference between the current torque and the post-completion torque, in which the control unit receives a next gear change command according to the difference between the current torque and the post-completion torque.

In addition, in order to solve the foregoing problem, the present description is directed to an embodiment of a straddle-type vehicle including the above gear change control device.

Further, in order to solve the foregoing problem, the present description is directed to an embodiment of a method of controlling a gearbox, comprising: disengaging a clutch by actuating a clutch actuator and changing shift gears in response to a gear change command by a rider; obtaining torque being transmitted from a drive-side member of the clutch to a downstream mechanism in a torque transmission path as current torque, the downstream mechanism including a driven-side member of the clutch; obtaining torque estimated to be transmitted from the drive-side member to the downstream mechanism after completion of engagement of the clutch as post-completion torque; controlling a degree of engagement of the clutch according to a difference between the current torque and the post-completion torque; and starting to receive a next gear change command according to the difference between the current torque and the post-completion torque.

The present teaching enables control to allow the rider to sense deceleration and acceleration that will occur after the completion of engagement of the clutch, even before the clutch is completely engaged. The next gear change command can then be received after the rider senses deceleration or acceleration at the shift gear corresponding to the first gear change command. As a result, it is possible to improve the riding comfort of the vehicle by reducing the occurrence of deceleration and acceleration exceeding the expectation of the rider due to successive gear changes. The straddle-type vehicle may be a motorcycle (including a scooter), a four-wheeled buggy, a snowmobile or a two-wheeled electric vehicle, for example.

The description above discloses in particular, in order to improve the riding comfort of a vehicle by reducing the occurrence of deceleration and acceleration exceeding the expectation of a rider due to gear changes, an embodiment of a gear change control device which calculates current torque being currently transmitted from a drive-side member of a clutch to a driven-side member of the clutch, and also calculates post-completion torque estimated to be transmitted from the drive-side member to the driven-side member after the completion of engagement of the clutch. The gear change control device then controls the degree of engagement of the clutch according to the difference between the current torque and the post-completion torque, and receives a next gear change command according to the difference between the current torque and the post-completion torque.

The description above further discloses an embodiment of a gear change control device comprising: a clutch actuator for changing a degree of engagement of a clutch; a current torque obtaining section for obtaining torque being transmitted from a drive-side member of the clutch to a downstream mechanism in a torque transmission path as current torque, the downstream mechanism including a driven-side member of the clutch; a post-completion torque obtaining section for obtaining torque estimated to be transmitted from the drive-side member to the downstream mechanism after completion of engagement of the clutch as post-completion torque; and a control unit for disengaging the clutch by actuating the clutch actuator and changing shift gears in response to a gear change command by a rider, and then controlling the degree of engagement of the clutch according to a difference between the current torque and the post-completion torque, wherein the control unit receives a next gear change command according to the difference between the current torque and the post-completion torque.

The description further discloses an embodiment of a gear change control device, wherein the current torque obtaining section calculates the current torque based on torque outputted from a power source and inertia torque of a mechanism upstream of the drive-side member in the torque transmission path.

The description further discloses an embodiment of a gear change control device, wherein the post-completion torque obtaining section estimates torque outputted from a power source after the completion of engagement of the clutch and inertia torque of a mechanism upstream of the drive-side member after the completion of engagement of the clutch, and calculates the post-completion torque based on the estimated torque and the estimated inertia torque.

The description further discloses an embodiment of a gear change control device, wherein the control unit starts receiving a next gear change command according to a time when the difference between the current torque and the post-completion torque becomes a predetermined value or less.

The description further discloses an embodiment of a straddle-type vehicle comprising the gear change control device according to one of the above embodiments.

The description further discloses an embodiment of a method of controlling a gearbox, comprising: disengaging a clutch by actuating a clutch actuator and changing shift gears in response to a gear change command by a rider; obtaining torque being transmitted from a drive-side member of the clutch to a downstream mechanism in a torque transmission path as current torque, the downstream mechanism including a driven-side member of the clutch; obtaining torque estimated to be transmitted from the drive-side member to the downstream mechanism after completion of engagement of the clutch as post-completion torque; controlling a degree of engagement of the clutch according to a difference between the current torque and the post-completion torque; and starting to receive a next gear change command according to the difference between the current torque and the post-completion torque.

**Claims**

1. Vehicle having a clutch and a gear box as part of a torque transmission path, and comprising:

   a clutch actuator for changing a degree of engagement of the clutch;
a current torque obtaining section for obtaining torque being currently transmitted from a drive-side member of the clutch to a downstream mechanism in the torque transmission path as current torque (Tpre), the downstream mechanism including a driven-side member of the clutch;
a post-completion torque (Tfin) obtaining section for obtaining torque estimated to be transmitted from the drive-side member to the downstream mechanism after completion of engagement of the clutch as post-completion torque; and
a control unit functioning as a gear change control device for disengaging the clutch by actuating the clutch actuator and changing shift gears in response to a gear change command, and then controlling the degree of engagement of the clutch according to a difference between the current torque and the post-completion torque, wherein the control unit receives a next gear change command according to the difference between the current torque and the post-completion torque.

2. Vehicle according to claim 1, wherein the current torque obtaining section is configured to calculate the current torque based on torque outputted from a power source and inertia torque of a mechanism upstream of the drive-side member in the torque transmission path.

3. Vehicle according to claim 1 or 2, wherein the post-completion torque obtaining section is configured to estimate torque outputted from a power source after the completion of engagement of the clutch and inertia torque of a mechanism upstream of the drive-side member after the completion of engagement of the clutch, and to calculate the post-completion torque based on the estimated torque and the estimated inertia torque.

4. Vehicle according to one of the claims 1 to 3, wherein the control unit starts receiving a next gear change command according to a time when the difference between the current torque and the post-completion torque becomes a predetermined value or less.

5. Method of controlling a gearbox and a clutch in a torque transmission path of a vehicle, comprising:

disengaging the clutch by actuating a clutch actuator and changing shift gears in response to a gear change command;
obtaining torque being transmitted from a drive-side member of the clutch to a downstream mechanism in a torque transmission path as current torque, the downstream mechanism including a driven-side member of the clutch;
obtaining torque estimated to be transmitted from the drive-side member to the downstream mechanism after completion of engagement of the clutch as post-completion torque;
controlling a degree of engagement of the clutch according to a difference between the current torque and the post-completion torque; and
starting to receive a next gear change command according to the difference between the current torque and the post-completion torque.

**Patentansprüche**

1. Fahrzeug, das eine Kupplung und ein Getriebe als einen Teil eines Drehmomentübertragungspfades hat, und das aufweist:

einen Kupplungsbetätiger zum Verändern eines Eingriffsgrades der Kupplung;
einen Momentandrehmoment- Erlangungsabschnitt zum Erlangen eines Drehmomentes, das momentan von einem antriebsseitigen Teil der Kupplung zu einer stromabwärtigen Vorrichtung in dem Drehmomentübertragungspfad als momentanes Drehmoment (Tpre) übertragen wird, wobei die stromabwärtige Vorrichtung ein angetriebenes Teil der Kupplung enthält;
einen Nachbeendigungs- Drehmoment- (Tfin) - Erlangungsabschnitt zum Erlangen eines Drehmomentes, abgeschätzt als Nachbeendigungs-Drehmoment von dem antriebsseitigen Teil, um zu der stromabwärtigen Vorrichtung nach der Eingriffsbeendigung der Kupplung übertragen zu werden; und
eine Steuereinheit, die als Gangwechsel-Steuerungsvorrichtung zum Außer- Eingriff-Kommen der Kupplung durch Betätigen des Kupplungsbetätigers und Verändern der Schaltzahnräder in Abhängigkeit von einem Gangwechselbefehl funktioniert, und dann Steuern des Eingriffsgrades der Kupplung entsprechend einer Differenz zwischen dem momentanen Drehmoment und dem Nachbeendigungs- Drehmoment, wobei die Steuereinheit einen nächsten Gangwechselbefehl entsprechend einer Differenz zwischen dem momentanen Drehmoment und dem Nachbeendigungs- Drehmoment empfängt.

2. Fahrzeug nach Anspruch 1, wobei der Momentandrehmoment- Erlangungsabschnitt konfiguriert ist, das momentane Drehmoment zu berechnen auf der Grundlage eines Drehmomentes, ausgegeben von einer Antriebsquelle, und des Trägheitsmomentes einer Vorrichtung stromauf des antriebsseitigen Teils in dem Drehmomentübertragungspfad.

3. Fahrzeug nach Anspruch 1 oder 2, wobei der Nachbeendigungs- Drehmoment- Erlangungsabschnitt konfiguriert ist, ein Drehmoment, ausgegeben von einer Antriebsquelle nach der Eingriffsbeendigung der Kupplung und ein Trägheitsmoment einer Vorrichtung stromauf des antriebsseitigen Teiles nach Eingriffsbeendigung der Kupplung, abzuschätzen und ein Nachbeendigungs- Drehmoment auf der Grundlage des abgeschätzten Drehmomentes und des abgeschätzten Trägheitsmomentes zu berechnen.

4. Fahrzeug nach einem der Ansprüche 1 bis 3, wobei die Steuereinheit das Empfangen eines nächsten Gangwechselbefehls entsprechend einer Zeit startet, wenn die Differenz zwischen dem momentanen Drehmoment und dem Nachbeendigungs-Drehmoment ein vorbestimmter Wert oder kleiner wird.

5. Verfahren zum Steuern eines Getriebes und einer Kupplung in einem Drehmomentübertragungspfad eines Fahrzeuges, aufweisend:

Außer- Eingriff- Bringen der Kupplung durch Betätigen eines Kupplungsbetätigers und Verändern der Schaltzahnräder in Abhängigkeit von einem Gangwechselbefehl;
Erlangen des Drehmomentes, das von einem antriebsseitigen Teil der Kupplung zu einer stromabwärtigen Vorrichtung in dem Drehmomentübertragungspfad als momentanes Drehmoment (Tpre) übertragen wird, wobei die stromabwärtige Vorrichtung ein abtriebsseitiges Teil der Kupplung enthält;
Erlangen eines Drehmomentes, abgeschätzt, um von dem antriebsseitigen Teil zu der stromabwärtigen Vorrichtung nach Eingriffsbeendigung der Kupplung als Nachbeendigungs-Drehmoment übertragen zu werden;
Steuern eines Eingriffsgrades der Kupplung entsprechend einer Differenz zwischen dem momentanen Drehmoment und dem Nachbeendigungs- Drehmoment; und
Starten, um einen nächsten Gangwechselbefehl entsprechend einer Differenz zwischen dem momentanen Drehmoment und dem Nachbeendigungs- Drehmoment zu empfangen.

**Revendications**

1. Véhicule possédant un embrayage et une boîte de vitesses en tant que partie d'un trajet de transmission de couple, et comprenant :

un actionneur d'embrayage pour changer un degré de prise de l'embrayage ;
une section d'obtention de couple actuel pour obtenir un couple actuellement transmis d'un élément côté entraînement de l'embrayage à un mécanisme aval dans le trajet de transmission de couple en tant que couple actuel (Tpre), le mécanisme aval comprenant un élément côté entraîné de l'embrayage ;
une section d'obtention de couple post-achèvement (Tfin) pour obtenir un couple estimé être transmis de l'élément côté entraînement au mécanisme aval après l'achèvement de prise de l'embrayage en tant que couple post-achèvement ; et
une unité de commande servant de dispositif de commande de changement de vitesses pour séparer l'embrayage en actionnant l'actionneur d'embrayage et en changeant des vitesses en réponse à une commande de changement de vitesses, et puis commander le degré de prise de l'embrayage selon une différence entre le couple actuel et le couple post-achèvement,
dans lequel l'unité de commande reçoit une commande de changement de vitesses suivante selon la différence entre le couple actuel et le couple post-achèvement.

2. Véhicule selon la revendication 1, dans lequel la section d'obtention de couple actuel est configurée pour calculer le couple actuel en fonction d'un couple produit à partir d'une source de puissance et un couple d'inertie d'un mécanisme en amont de l'élément côté entraînement dans le trajet de transmission de couple.

3. Véhicule selon la revendication 1 ou 2, dans lequel la section d'obtention de couple post-achèvement est configurée pour estimer un couple produit à partir d'une source de puissance après l'achèvement de prise de l'embrayage et un couple d'inertie d'un mécanisme en amont de l'élément côté entraînement après l'achèvement de prise de l'embrayage, et pour calculer le couple post-achèvement en fonction du couple estimé et du coupe d'inertie calculé.

4. Véhicule selon une des revendications 1 à 3, dans lequel l'unité de commande commence à recevoir une commande de changement de vitesses suivante selon un instant auquel la différence entre le couple actuel et le couple post-achèvement est égale ou inférieure à une valeur prédéterminée.

5. Procédé de commande d'une boîte de vitesses et d'un embrayage dans un trajet de transmission de couple d'un véhicule, comprenant :

la séparation de l'embrayage en actionnant un actionneur d'embrayage et en changeant des vitesses en réponse à une commande de changement de vitesses ;

l'obtention d'un couple transmis d'un élément côté entraînement de l'embrayage à un mécanisme aval dans un trajet de transmission de couple en tant que couple actuel, le mécanisme aval comprenant un élément côté entraîné de l'embrayage ;

l'obtention d'un couple estimé être transmis de l'élément côté entraînement au mécanisme aval après l'achèvement de prise de l'embrayage en tant que couple post-achèvement ;

la commande d'un degré de prise de l'embrayage selon une différence entre le couple actuel et le couple post-achèvement ; et

le commencement de la réception d'une commande de changement de vitesses suivante selon la différence entre le couple actuel et le couple post-achèvement.

[FIG. 1]

[FIG. 2]

[FIG. 3]

[FIG. 4]

11

| Current torque obtaining section | 11a |
| EG torque obtaining section | 11b |
| Inertia torque obtaining section | 11c |

| post-completion torque obtaining section | 11d |
| post-completion EG torque obtaining section | 11e |
| post-completion inertia torque obtaining section | 11f |

| Clutch actuator control section | 11g |

| Shift actuator control section | 11h |

| Reception permission determination section | 11i |

[FIG. 5]

Engagement direction

Command actuation amount

0  Torque deviation
(Tfin—Tpre)

(N・m)

Disengagement direction

[FIG. 6]

[FIG. 7]

```
                                    ┌─────────────┐
                                    │    START    │
                                    └──────┬──────┘
                                           │ ◄──────────────────────┐
                                           ▼          S101           │
                               ┌───────────────────────┐   no        │
                               │ Is gear change command ├───────►─────┘
                               │      inputted?         │
                               └───────────┬───────────┘
                                           │ yes      S102
                                           ▼                       yes
                               ┌───────────────────────┐───────────────┐
                               │ Is prohibition flag ON?│               │
                               └───────────┬───────────┘               │
                                           │ no                        │
                                           ▼                           │
                               ┌───────────────────────┐               │
                               │ Prohibition flag is set ON. ├─ S103    │
                               └───────────┬───────────┘               │
                                           ▼                           │
                               ┌───────────────────────┐               │
                               │   Disengage clutch.    ├─ S104         │
                               │    Move shift gear.    │               │
                               └───────────┬───────────┘               │
                                           ▼                           │
                               ┌───────────────────────┐               │
                               │ Calculate post-completion │            │
                               │ transmission torque Tfin and ├─ S105   │
                               │ current transmission torque Tpre. │    │
                               └───────────┬───────────┘               │
                                           ▼                           │
                               ┌───────────────────────┐               │
                               │  Calculate command     ├─ S106         │
                               │  actuation amount.     │               │
                               └───────────┬───────────┘               │
                                           ▼                           │
                               ┌───────────────────────┐               │
                               │   Update degree of     ├─ S107         │
                               │ engagement of clutch.  │               │
                               └───────────┬───────────┘               │
        S112                               ▼         S108              │
 ┌───────────────────────┐  no  ┌───────────────────────┐  no  S116   │
 │ Is gear change command ├─────│ Torque deviation (Tfin - Tpre) ├──┐  │
 │      inputted?         │     │ < reception permission torque │  │  │
 └───────────┬───────────┘      │      deviation?           │    │  │
             │ yes      S113     └───────────┬───────────┘    │  │
             ▼                               │ yes    S109   ▼  │
 ┌───────────────────────┐      ┌───────────────────────┐ ┌─────┐
 │ Is prohibition flag OFF? │   │      i ← i + 1         │ │ i ← 0 │
 └───────────┬───────────┘      └───────────┬───────────┘ └───┬─┘
 yes         │ no                           ▼       S110      │
             ▼                   ┌───────────────────────┐ no │
 ┌───────────────────────┐       │ Time measurement variable i > ├──►
 │ Clutch rotational speed │     │ reception permission condition │  │
 │ difference < rotational speed │ │      value?          │    │
 │ difference for discontinuing │ └───────────┬───────────┘    │
 │     half-clutch?        │  no             │ yes    S111    │
 └───────────┬───────────┘                   ▼                │
 no          │ yes      S115     ┌───────────────────────┐    │
             ▼                   │ Prohibition flag is set OFF. │
 ┌───────────────────────┐       └───────────┬───────────┘    │
 │     Engage clutch.     │                   │ ◄─────────────┘
 └───────────┬───────────┘                   │
             ▼                                │
      ┌─────────────┐ ◄─────────────────────┘
      │     END     │
      └─────────────┘
```

[FIG. 8]

(a)

(b)

(c)

(d)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1674755 A